# EUROPEAN PATENT APPLICATION

(11) **EP 2 990 781 A1**
(43) Date of publication of application: **02.03.2016**
(21) Application number: 15182924.9
(22) Date of filing: 28.08.2015
(51) Int. Cl.: G01N 21/64

(54) **FLUOROSCENCE DETECTION APPARATUS AND FLUOROSCENCE DETECTION METHOD**

(30) Priority: 29.08.2014 JP 2014174792
(71) Applicant: SYSMEX CORPORATION, Kobe-shi, Hyogo 651-0073 (JP)
(72) Inventor: Tagawa, Ayato, Hyogo 651-0073 (JP)
(74) Representative: Hoffmann Eitle

(57) **Abstract**

Disclosed is a fluorescence detection apparatus comprising: a photodetector that detects colors; a light filter member on the photodetector that transmits light at on or above a predefined wavelength and that cuts off light with a wavelength included in a wavelength band below the predefined wavelength, the predefined wavelength being included in a wavelength band being a sensitivity range of the photodetector; an irradiator that irradiates a fluorescent substance on the light filter member, with excitation light with a peak wavelength included in the wavelength band below the predefined wavelength; and a first correction unit that compensates for a signal of light cut off by the light filter member out of fluorescence emitted from the fluorescent substance in response to irradiation from the excitation light.

## Description

### BACKGROUND

This disclosure relates to a fluorescence detection apparatus, a test substance detection apparatus, and a fluorescence detection method.

As one method of detecting a test substance such as a gene or protein contained in a biological specimen, there is a method of binding a fluorescent substance as a marker substance to a test substance. This is combined with detecting the test substance using fluorescence emitted from the fluorescent substance when the test substance is irradiated with excitation light.

A lens free fluorescent microscope (for example, Scientific Reports, 4:3760, DOI:10.1038, srep03760 (Non-patent Literature 1)) is an apparatus that uses the above method. Using a light-receiving sensor such as a CMOS sensor, the lens free fluorescent microscope is capable of wide-field detection of fluorescence emitted from a fluorescent substance, which is bound to a test substance and located on the light-receiving sensor.

The light-receiving sensor described in Non-patent Literature 1 is capable of identifying and detecting multiple colors. Further, a prism is arranged above the light-receiving sensor. The prism reflects excitation light coming obliquely to the light-receiving sensor to minimize entry of the excitation light into the light-receiving sensor. The prism thereby prevents detection of the excitation light by the light-receiving sensor as noise.

### SUMMARY

An embodiment of a fluorescence detection apparatus comprising: a photodetector that identifies and detects colors; a filter member on the photodetector that transmits light at or above a predefined wavelength within the sensitivity wavelength range of the photodetector, and that blocks light of a lower wavelength range below the predefined wavelength;
an irradiator irradiates a fluorescent substance on the filter member, with excitation light having a peak wavelength within the lower wavelength range; and a first correction unit that compensates for signals of the light blocked by the filter member from fluorescence emitted from the fluorescent substance in response to irradiation from the excitation light.

An embodiment of a fluorescence detection method comprising: locating a fluorescent substance to be measured on a filter member that transmits light at or above a predefined wavelength and that blocks light below the predefined wavelength, the predefined wavelength is within the sensitivity range of a photodetector that identifies and detects colors; irradiating the fluorescent substance on the filter member with excitation light having a peak wavelength below the predefined wavelength; detecting fluorescence emitted from the fluorescent substance in response to the excitation light and transmitted through the filter member; and compensating for signals of the light blocked by the filter member from fluorescence emitted from the fluorescent substance in response to irradiation from the excitation light.

### BRIEF DESCRIPTION OF DRAWINGS

Fig. 1 is a schematic configuration diagram illustrating a test substance detection device according to an embodiment;
Fig. 2 is an explanation diagram illustrating a photodetection unit of the test substance detection device of Fig. 1 in an enlarged scale;
Fig. 3 is a block diagram illustrating a signal conversion device of the test substance detection device of Fig. 1;
Fig. 4 is a graph illustrating the relationship among the characteristics of a filter member of the test substance detection device illustrated in Fig. 1, the spectral sensitivity of a photodetector of the test substance detection device, and the wavelength of excitation light;
Fig. 5 is a graph illustrating characteristics of the filter member;
Fig. 6 is a schematic diagram illustrating a procedure of processing a test substance;
Figs. 7A and 7B are perspective views schematically illustrating photodetectors used in an experiment;
Figs. 8A and 8B illustrate intensity profiles (on the X axis in Figs. 7A and 7B) of signals detected by the photodetector at the time of irradiation with deep ultraviolet light as excitation light, in which Fig. 8A illustrates the intensity profile without the filter member and Fig. 8B illustrates the intensity profile with the filter member;
Figs. 9A and 9B illustrate intensity profiles (on the X axis in Figs. 7A and 7B) of signals detected by the photodetector at the time of irradiation with ultraviolet light as excitation light, in which Fig. 9A illustrates the intensity profile without the filter member, and Fig. 9B illustrates the intensity profile with the filter member; and
Fig. 10A illustrates the same intensity profile as Fig. 8A, and Fig. 10B illustrates an intensity profile obtained when a certain correction is made on an output signal illustrated in Fig. 9B.

### DETAILED DESCRIPTION OF EMBODIMENTS

Embodiments of the invention are explained with reference to drawings. In the respective drawings referenced herein, the same constituents are designated by the same reference numerals and duplicate explanation concerning the same constituents is basically omitted. Drawings are provided to illustrate respective examples only. No dimensional proportions in the drawings shall impose a restriction on the embodiments. For this reason, specific dimensions and the like should be interpreted with the following descriptions taken into consideration. In addition, the drawings include parts whose dimensional relationship and ratios differ from one drawing to another.

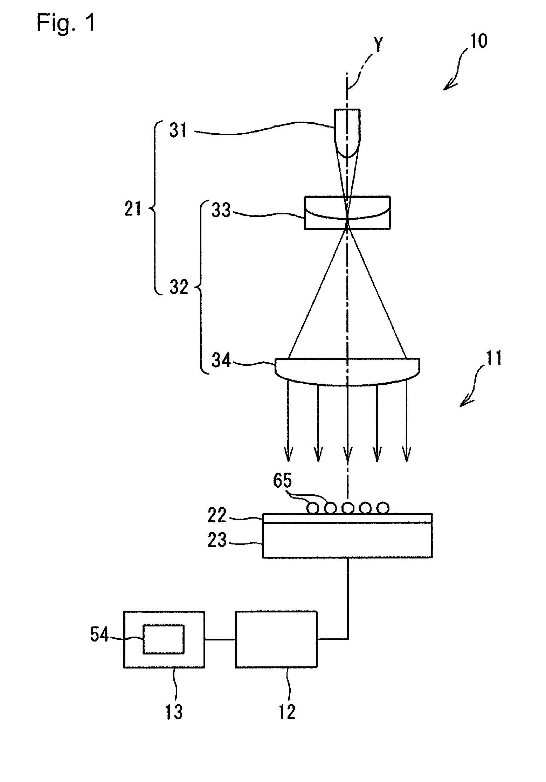

A configuration of a test substance detection system according to an embodiment is described. As illustrated in Fig. 1, test substance detection system 10 according to the embodiment includes test substance detection device 11, signal conversion device 12, and image processing device 13.

Test substance detection device 11 includes irradiator 21, filter member 22, and photodetector 23. Filter member 22 and photodetector 23 are stacked in this order from above. Irradiator 21 is arranged above filter member 22 and photodetector 23. Compound 65 including a test substance and a fluorescent substance is located on filter member 22. The fluorescent substance of compound 65 on filter member 22 is detected by photodetector 23, and thereby the test substance is detected indirectly. Accordingly, test substance detection device 11 of this embodiment also functions as a fluorescence detection apparatus.

### <Configuration of Irradiator 21>

Irradiator 21 includes light source 31 and collimating optical system 32. A semiconductor element such as a light emitting diode (LED) is used as light source 31. Light source 31 is arranged in such a way that its optical axis Y extends in a vertical direction, and emits light downward. Light source 31 comprises a semiconductor light-emitting device, such as an LED, whose power consumption is low relative to a light bulb and the like, which enables lower power consumption than light source 31 comprising a light bulb.

Collimating optical system 32 is arranged below light source 31. Collimating optical system 32 includes two lenses 33 and 34 arranged vertically along optical axis Y of light source 31. First lens 33 arranged above the other is constituted by a concave lens and diffuses light from light source 31. Second lens 34 arranged below the other is constituted by a convex lens and converts the light diffused by first lens 33 into parallel light. The parallel light transmitted through second lens 34 travels downward along optical axis Y of light source 31.

The light source emits ultraviolet light with a peak wavelength in a range from 300 nm or more to less than 450 nm. More specifically, in this embodiment, ultraviolet light emitted from light source 31 has a peak wavelength of 405 nm. The ultraviolet light emitted from light source 31 excites the fluorescent substance located on filter member 22 to cause the fluorescent substance to emit fluorescence.

### <Configuration of Filter Member 22>

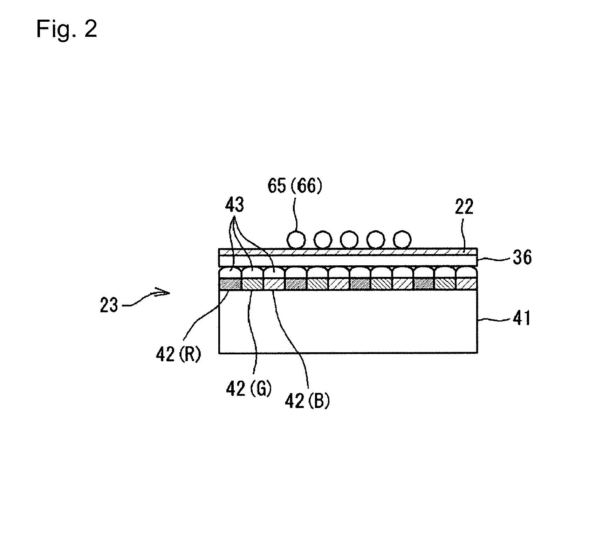

As illustrated in Fig. 2, filter member 22 is formed in a film shape on a surface of glass plate 36 made of quartz glass or the like. Filter member 22 is a long-pass filter having such characteristics as to cut off light in a wavelength band below a predefined wavelength in the visible light wavelength band, and to transmit light in a wavelength band at or above the predefined wavelength. Filter member 22 comprises a so-called interference filter made by coating a substrate with a dielectric multilayer film and a metal film, and can cut light in the predefined wavelength band by light interference. The interference filter has incident angle dependency and exhibits strong cutting characteristics for light entering its surface perpendicularly. Because filter member 22 is arranged horizontally, the parallel light that travels downward from irradiator 21 enters filter member 22 perpendicularly.

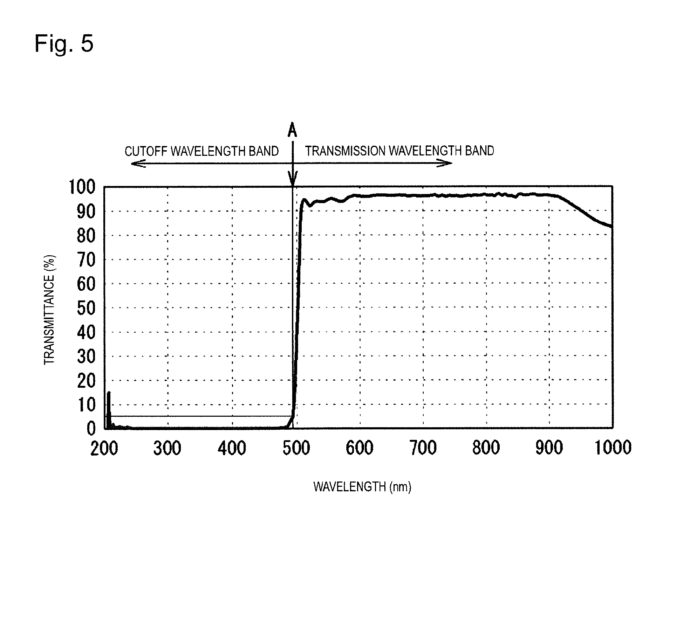

Filter member 22 used in this embodiment has a transmittance measured by a spectrophotometer as illustrated in Fig. 5. Filter member 22 has such characteristics that it can transmit light in a wavelength band (transmission wavelength band) at or above predefined wavelength A, which is around 500 nm, and can cut off light in a wavelength band (cutoff wavelength band) below predefined wavelength A. Predefined wavelength A being a boundary between the transmission wavelength band and the cutoff wavelength band is set so that the transmittance of light at this wavelength may be 5%, for example.

In this embodiment, the excitation light emitted from the light source has a peak wavelength of 405 nm, as described above. Because this peak wavelength is in the cutoff wavelength band of filter member 22, filter member 22 cuts a large part of the excitation light. The excitation light emitted from light source 31 is parallel light entering filter member 22 perpendicularly, and thus filter member 22 can cut the excitation light efficiently.

Filter member 22 has a transmittance of about 0.04% for light with a wavelength of 405 nm which is the peak wavelength of the excitation light from light source 31, and has a transmittance of about 0.1% for light with a wavelength of 450 nm which is a longer wavelength than the peak wavelength of the excitation light. Accordingly, filter member 22 has such characteristics as to cut off 99% or more of both light with a wavelength of 405 nm and light with a wavelength of 450 nm.

On the other hand, filter member 22 has a transmittance of 95% for light with a wavelength of 513 nm, a transmittance of 92% for light with a wavelength of 520 nm, and a transmittance of 94% for light with a wavelength of 550 nm, which means that filter member 22 has a transmittance of 90% or more for light with every one of these wavelengths. Accordingly, filter member 22 has such light transmission characteristics that the transmittance of fluorescence emitted from the fluorescent substance is 90 times or more the transmittance of the parallel light emitted from irradiator 21.

Filter member 22 is not limited to having the above characteristics. For example, the predefined wavelength, being the boundary between the transmission wavelength band and the cutoff wavelength band, of filter member 22 is more preferably set within a range from 400 nm or more to less than 500 nm.

### <Configuration of Photodetector 23>

As illustrated in Fig. 2, photodetector 23 includes light receiver 41 having photoelectric conversion elements, color filters 42 placed on light receiver 41, and microlenses 43 placed on color filters 42. Filter member 22 described above is placed on microlenses 43.

For example, a CMOS image sensor may be used as light receiver 41. The CMOS image sensor is made by providing photodiodes, MOSFETs, interconnections, and the like on a silicon substrate by use of known ion implantation technique, film formation technique, and the like. The CMOS image sensor has a configuration where cells (not illustrated) including photodiodes and MOSFETS connected to the photodiodes are arrayed in grids. The use of a solid-state image sensor such as a CMOS image sensor as light receiver 41 makes it possible to integrate cells constituting photodetector 23, thereby increase the resolution of an image captured by photodetector 23, and thereby improve the sensitivity of detecting a test substance. Further, since the power consumption of a CMOS image sensor is low relative to that of a photomultiplier tube (PMT), it is possible to save power better in comparison with a configuration where a PMT or the like is used as photodetector 23.

Color filters 42 selectively transmit light in wavelength bands of red (R), green (G), and blue (B), respectively. Hence, using color filters 42, photodetector 23 can identify and detect light in wavelength bands of colors, that is, visible light of colors. To put it another way, photodetector 23 includes: a first photodetector having a red spectral sensitivity with a peak wavelength in a range from 620 nm or more to less than 750 nm; a second photodetector having a green spectral sensitivity with a peak wavelength in a range from 495 nm or more to less than 570 nm; and a third photodetector having a blue spectral sensitivity with a peak wavelength in a range from 450 nm or more to less than 495 nm. Excitation light emitted from light source 31 has a wavelength band overlapping the wavelength band of sensitivity range of the third photodetector.

Microlenses 43 concentrate light, having entered from above, on the photodiodes of light receiver 41 via color filters 42.

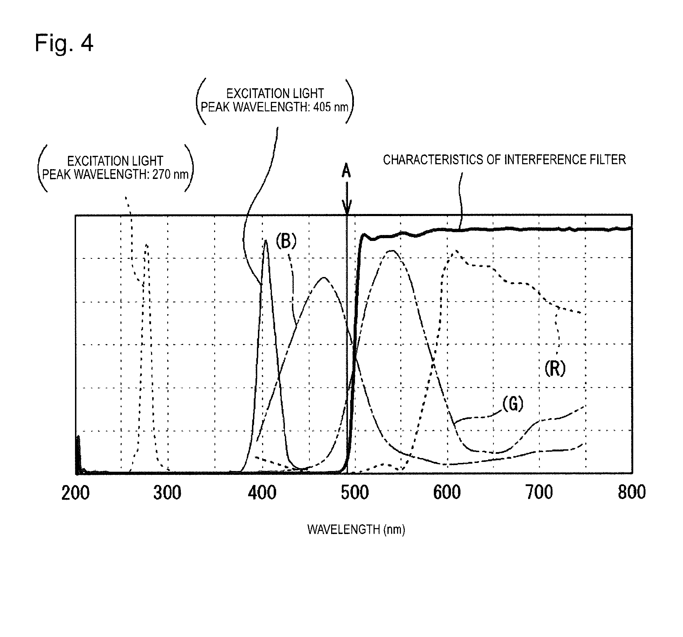

Fig. 4 illustrates graphs respectively representing the wavelength of excitation light emitted from light source 31, the wavelength band being the sensitivity range of photodetector 23, and the wavelength bands of light that filter member 22 transmits and cuts off. Note that, since this drawing intends to illustrate the relative relationship among the wavelengths of the graphs indicated by the horizontal axis, the vertical axis of each graph is not particularly specified. What the vertical axis of each graph means is an output (any unit) from the LED being the light source for the graph of the excitation light, transmittance (%) as in Fig. 5 for the graph indicating the characteristics of filter member 22, and quantum efficiency (%) for the graph indicating the spectral sensitivity of photodetector 23 represented by (R), (G), and (B).

As described above with reference to Fig. 4, using the predefined wavelength A of around 500 nm as the boundary, filter member 22 cuts off light in the cutoff wavelength band below the predefined wavelength A and transmits light in the transmission wavelength band at or above the predefined wavelength A. Accordingly, the cutoff wavelength band cut off by filter member 22 overlaps the blue (B) wavelength band and green (G) wavelength band being the sensitivity range of photodetector 23. In other words, filter member 22 partially cuts off blue light and green light out of light in the sensitivity range of photodetector 23. The cutoff wavelength band of filter member 22 does not necessarily have to be the one described above as long as it overlaps at least the blue (B) wavelength band.

Meanwhile, the excitation light emitted from light source 31 has a peak wavelength of 405 nm which is included in the cutoff wavelength band of filter member 22, and therefore a large part of the excitation light is cut off by filter member 22. Accordingly, photodetector 23 is less likely to detect the excitation light and more likely to detect the fluorescence emitted from the fluorescent substance. Fig. 4 also illustrates, as light source 31, deep ultraviolet light with a peak wavelength of 270 nm. This deep ultraviolet light is cut off by filter member 22 because its wavelength is included in the cutoff wavelength band of filter member 22. Moreover, photodetector 23 has a quantum efficiency of about 0% at a wavelength of 270 nm, and thus has little detection sensitivity for deep ultraviolet light. In other words, the deep ultraviolet light with a wavelength of 270 nm is not detected by photodetector 23.

### <Configuration of Signal Conversion Device 12>

Signal conversion device 12 converts a signal acquired from light receiver 41 of photodetector 23 into image information and outputs the image information to image processing device 13. For example, signal conversion device 12 includes an analog-to-digital converter that converts an analog signal acquired from the photoelectric conversion elements into a digital signal. Specifically, signal conversion device 12 includes signal processor 51 and correction unit 52.

Signal processor 51 outputs electrical signals of three colors (RGB) to correction unit 52 upon reception of a signal outputted from light receiver 41. Correction unit 52 has a function to correct the RGB signals outputted from signal processor 51 to generate appropriate output signals. For example, correction unit 52 may be constituted by a computer including a CPU and a memory including a ROM, a RAM, and the like. In this case, the predefined correction function may be implemented by causing the CPU to execute a computer program stored in the memory.

Specifically, correction unit 52 includes two correction units, i.e., first correction unit 52A and second correction unit 52B. As described above, filter member 22 has a cutoff wavelength band that overlaps the visible light wavelength band detected by photodetector 23. Hence, filter member 22 cuts off even light of wavelengths that photodetector 23 is supposed to receive. To deal with this, first correction unit 52A executes correction to compensate for signals in the cutoff wavelength band.

Specifically, first correction unit 52A executes gamma correction such that output values of colors cut off by filter member 22 may be increased, and outputs the resultant values to image processing device 13 (see Fig. 1). In this embodiment, as illustrated in Fig. 4, a part of the blue (B) and green (G) wavelength bands is cut off by filter member 22. Accordingly, first correction unit 52A makes correction such that output values of blue and green colors may be increased.

Second correction unit 52B executes offset processing. Although filter member 22 cuts off a large part of the excitation light emitted from irradiator 21, a part of the excitation light may accidentally filter through filter member 22 and reach photodetector 23. Thus, second correction unit 52B carries out processing of subtracting signals corresponding to the excitation light having entered photodetector 23. Thereby, appropriate outputs from which the influence of the excitation light is removed may be obtained. Second correction unit 52B according to this embodiment carries out offset processing on blue (B) and green (G) wavelength bands close to the wavelength band of the excitation light. Note that the gamma correction by first correction unit 52A is performed on signals having been subjected to the offset processing by second correction unit 52B.

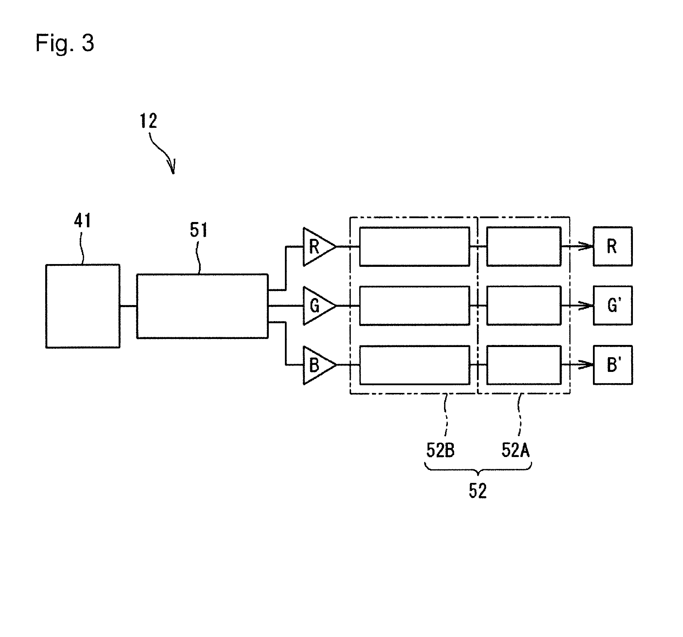

In Fig. 3, "B'" and "G'" respectively represent blue (B) and green (G) signals having been corrected by passing through correction unit 52.

### <Configuration of Image Processing Device 13>

Image processing device 13 generates an image based on information inputted from signal conversion device 12 and displays the image on display unit 54. Display unit 54 may be constituted by a display such as a liquid crystal panel.

Image processing device 13 is capable of calculating the amount of light detected by photodetector 23 based on the image information inputted from signal conversion device 12. Here, image processing device 13 has standard data indicating the relationship between the amount of light detectable by photodetector 23 and the amount of the fluorescent substance. Image processing device 13 has functions to calculate the amount of the fluorescent substance based on the standard data and calculate the amount of the test substance from the amount of the fluorescent substance thus calculated.

Image processing device 13 is constituted by a computer including a CPU and a memory including a ROM, a RAM, and the like. The various functions of image processing device 13 may be implemented by causing the CPU to execute a computer program stored in the memory.

### <Generation of Compound Including Test Substance>

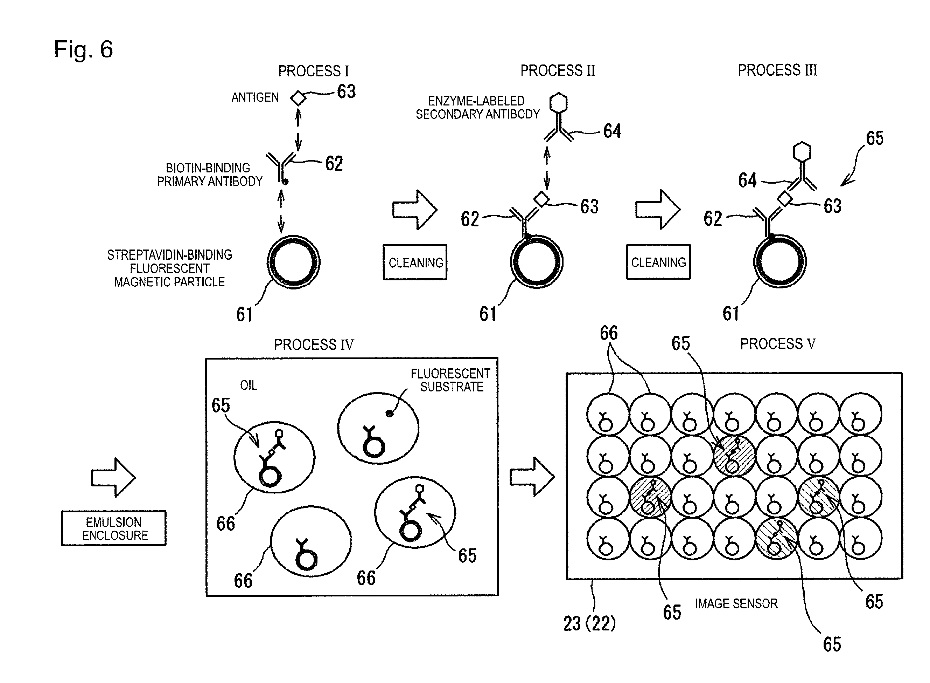

The compound to be detected by photodetector 23 including the fluorescent substance and the test substance can be generated by a procedure illustrated in Fig. 6. First, as illustrated in process I, primary antibody 62 is bound to magnetic particle 61 as a solid support, and then antigen 63 as the test substance is made to react with this primary antibody 62. For example, a streptavidin-binding fluorescent magnetic particle may be used as magnetic particle 61, and a biotin-binding primary antibody may be used as primary antibody 62.

Next, after a cleaning process, enzyme-labeled secondary antibody 64 is made to react with antigen 63 as illustrated in process II. Compound 65 made by binding antibodies 62 and 64 to antigen 63 is thereby generated as illustrated in process III.

Then, after a cleaning process, compound 65 is enclosed in each droplet 66 containing a fluorescent substrate and droplets 66 are dispersed in oil, and thereby an emulsion is generated as illustrated in process IV. In each droplet 66, an enzyme reacts with a fluorescent substrate and a fluorescent substance is thereby generated.

As the fluorescent substrate, a fluorescent substrate for peroxidase that generates resorufin being a fluorescent substance by reacting with peroxidase, a fluorescent substrate for alkaline phosphatase that generates BBT-anion being a fluorescent substance by reacting with alkaline phosphatase, or the like may be used. Note that resorufin generated by a fluorescent substrate for peroxidase is a fluorescent substrate that emits stronger fluorescence than organic pigments, for example; and BBT-anion generated by a fluorescent substrate for alkaline phosphatase is a fluorescent substrate with a larger Stokes shift and broader fluorescence spectrum than organic pigments, for example.

As illustrated in process V, droplets 66 thus generated by the above procedure are dropped onto photodetector 23 (practically onto filter member 22) and the droplets are irradiated with the excitation light from light source 31, and thereby fluorescence emitted from the fluorescent substance is detected by photodetector 23. In the example of process V, droplets 66 emitting fluorescence are hatched.

### <Verification Experiment>

The inventor conducts a verification experiment to examine a fluorescence image outputted from test substance detection system 10 described above. An experiment method is as follows.

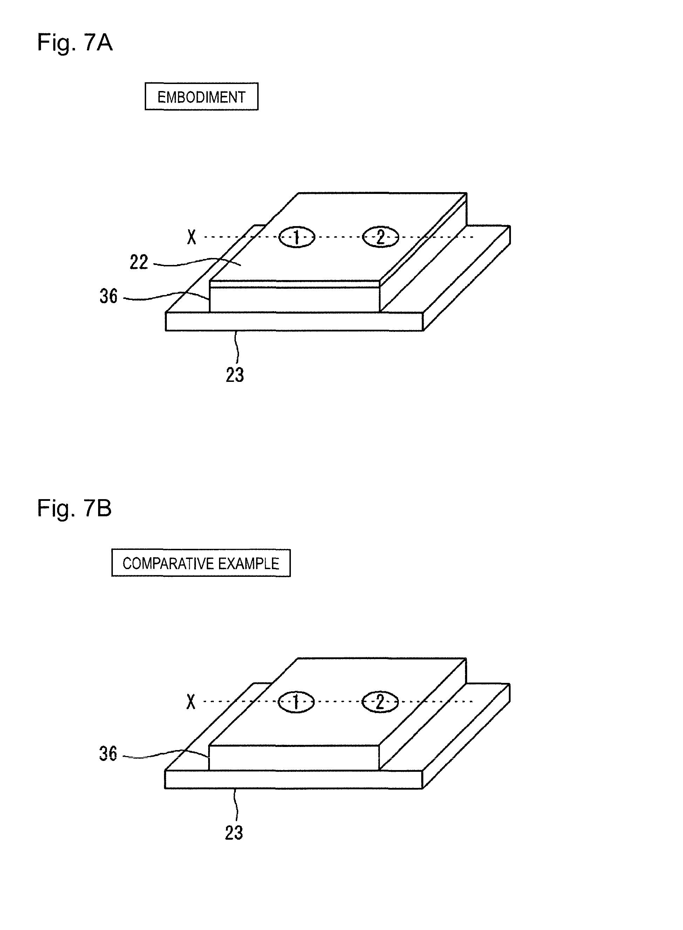

First, two samples are prepared, i.e., one having an interference filter as filter member 22 provided on quartz glass plate 36 arranged on photodetector 23 as illustrated in Fig. 7A (embodiment) and one not having the interference filter as illustrated in Fig. 7B (comparative example). Then, the following two kinds of quantum dots (1) and (2) as fluorescence substances are dropped on these objects respectively.
(1) Qdot 625 (wavelength of fluorescence 625 nm; Invitrogen Inc.), 1 µM, 0.5 µL.
(2) Qdot 705 (wavelength of fluorescence 705 nm; Invitrogen Inc.), 1 µM, 0.5 µL.

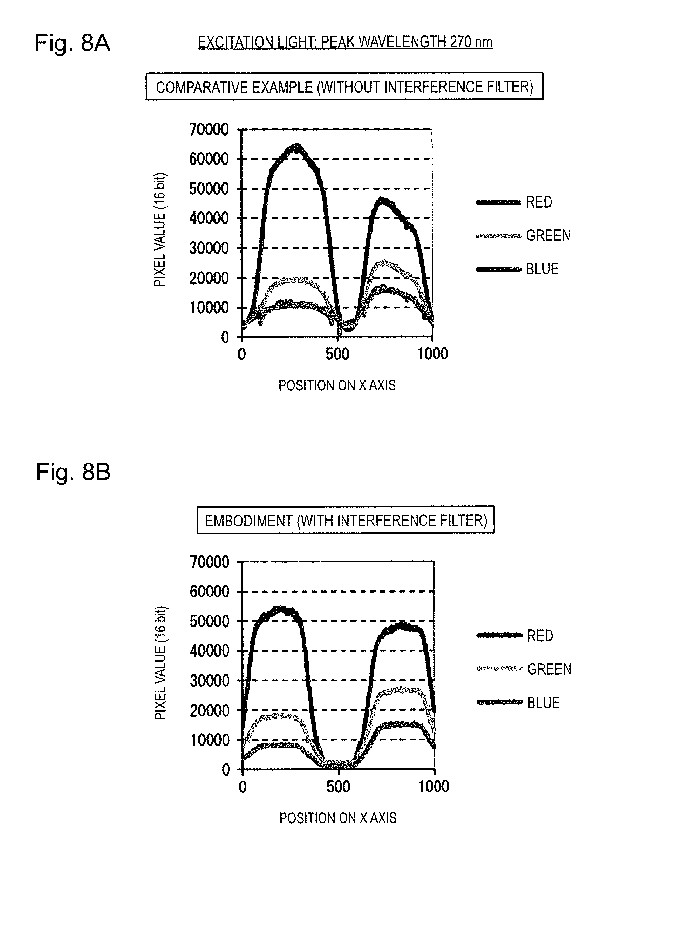

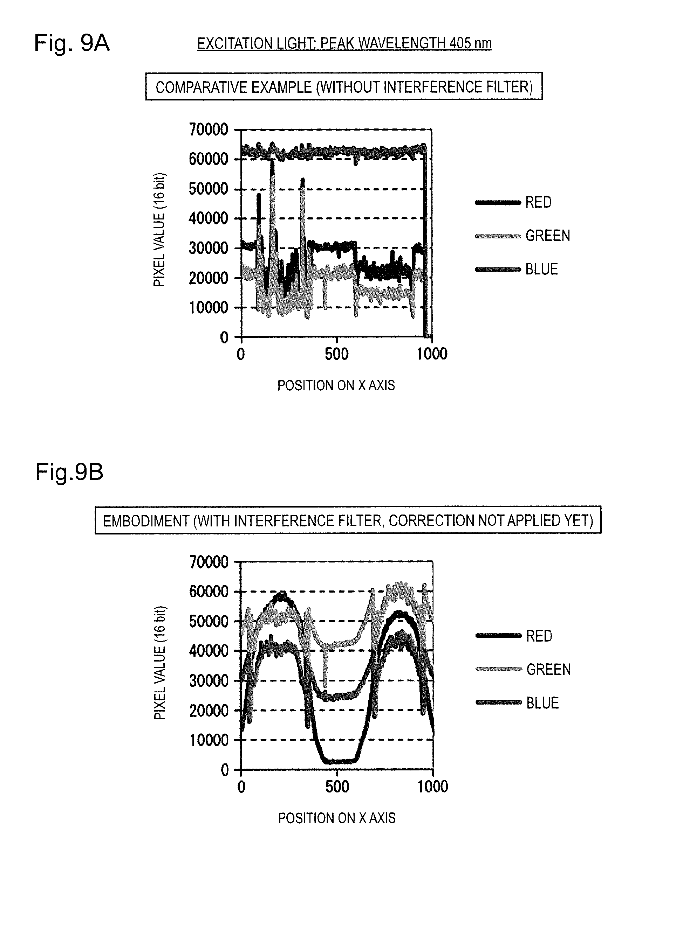

The samples according to the embodiment and the comparative example are each irradiated with ultraviolet light with a wavelength of 405 nm and deep ultraviolet light with a wavelength of 270 nm by irradiator 21. Then, the intensity profile (on the X axis in Figs. 7A and 7B) of each signal detected by photodetector 23 is obtained (see Figs. 8A, 8B, 9A and 9B).

Figs. 8A and 8B illustrate the intensity profiles according to the comparative example (Fig. 8A) and the embodiment (Fig. 8B) obtained when the irradiator irradiates the objects with deep ultraviolet light with a peak wavelength of 270 nm. No correction by correction unit 52 is carried out in any of these examples. As is clear from Figs. 8A and 8B, there is little difference in the intensity profile between the one with the interference filter and the one without the interference filter. This is because light receiver 41 of photodetector 23 has little detection sensitivity for deep ultraviolet light with a peak wavelength of 270 nm and thus the influence of the interference filter is little.

Figs. 9A and 9B illustrate the intensity profiles according to the comparative example (Fig. 9A) and the embodiment (Fig. 9B) obtained when the irradiator irradiates the objects with ultraviolet light with a peak wavelength of 405 nm. No correction by correction unit 52 is carried out in any of these examples.

In the case of the comparative example without the interference filter as illustrated in Fig. 9A, the intensity of blue light with a shorter wavelength than green light and red light is higher than the intensities of light of these colors. This is because the excitation light from light source 31 is detected by photodetector 23. On the other hand, as is understood from Fig. 9B, the use of the interference filter reduces the intensity of blue light and increases the intensities of green light and red light. This is because light with a short wavelength is cut off by the interference filter.

However, because no correction is made yet in the state illustrated in Fig. 9B, the intensities of light of these colors are not accurate. On the other hand, in the case of the irradiation with deep ultraviolet light with a peak wavelength of 270 nm as in the comparative example described above (see Fig. 8A), it can be considered that photodetector 23 receives fluorescence emitted from the fluorescent substance appropriately and outputs signals more accurately without being affected by the excitation light. Hence, a result of correction made by correction unit 52 is evaluated with an output result in the comparative example of Fig. 8A used as a reference.

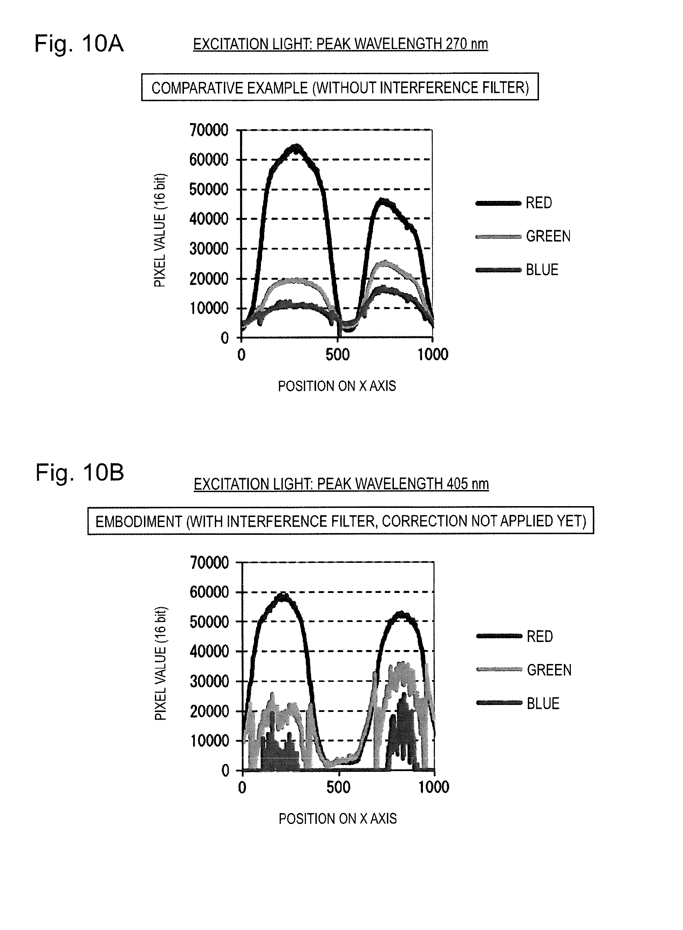

When the correction by correction unit 52 described above is executed on output signals exhibiting the intensity profile as in Fig. 9B, an intensity profile illustrated in Fig. 10B is obtained. Fig. 10A illustrates the same intensity profile as Fig. 8A being the reference profile for the purpose of simplifying the comparison. It is understood from the comparison of the intensity profiles in Figs. 10A and 10B that the correction of output signals from photodetector 23 by correction unit 52 brings a result similar to that of the comparative example, and thus that the correction of output signals by correction unit 52 is effective.

In test substance detection system 10 according to the embodiment described above, the excitation light emitted from irradiator 21 is cut off by filter member 22. Thus, it is possible to make the excitation light less likely to be detected by photodetector 23 without using an expensive prism such as one in the conventional technique (see Non-patent Literature 1). Accordingly, test substance detection system 10 capable of identifying and detecting multiple colors can be made at low cost.

The fluorescence of wavelengths included in the cutoff wavelength band of filter member 22 is cut off by filter member 22 even if it is included in the visible light wavelength band which is the sensitivity range of the photodetector. However, a signal output from photodetector 23 is corrected by first correction unit 52A and the visible light signal thus cut off is thereby compensated, so that the most accurate possible output signals of visible light can be obtained.

The cutoff wavelength band of filter member 22 partially overlaps the short-wavelength side of the visible light wavelength band of fluorescence being the sensitivity range of photodetector 23, particularly the wavelength bands of blue light and green light. Thus, it is possible to bring the peak wavelength of the excitation light emitted from light source 31 as close as possible to the visible light wavelength band. As to light source 31 of the excitation light, one with a shorter peak wavelength (deep ultraviolet light, for example) tends to be higher in cost. In addition, since a biological material such as DNA has an absorption region in the deep ultraviolet region, irradiation with deep ultraviolet light causes signal noise due to the existence of biological material. Accordingly, these problems can be solved by bringing the peak wavelength of the excitation light close to the visible light wavelength band.

Test substance detection system 10 according to the embodiment includes second correction unit 52B that corrects a signal outputted from photodetector 23 and thereby reduces excitation light transmitted through filter member 22 and detected by photodetector 23. Thus, even if excitation light filters through filter member 22 into photodetector 23, second correction unit 52B can reduce the influence of the excitation light.

In the above embodiment, in addition to light source 31 that emits ultraviolet light as excitation light as described above, irradiator 21 may include another light source that emits light in a wavelength band in which the fluorescent substance emits no fluorescence and with a peak wavelength included in the transmission wavelength band of filter member 22. In this case, it is possible to take a bright field image of the test substance with light emitted from irradiator 21. In other words, it is possible to capture not only a fluorescence image but also a bright field image without changing the direction of emission of light from light source 31.

### <Other Embodiment>

In the embodiment described above, a description has been given of an example of generating a fluorescent substance by making an enzyme-labeled secondary antibody react with an antigen which is a test substance, and making the enzyme react with a fluorescent substrate. Instead of this example, a compound may be generated by immobilizing a capture substance on a surface of filter member 22, binding a test substance to the capture substance, and binding a binding substance, containing a fluorescent substance such as quantum dots, to the test substance. In this case, the compound including the capture substance, the test substance, and the fluorescent substance is generated on filter member 22, and the test substance may be detected by making irradiator 21 irradiate the compound with excitation light.

In this case, the capture substance may be immobilized via a binding group that is bound to filter member 22, for example. Examples of this binding group include a thiol group, a hydroxyl group, a phosphoric acid group, a carboxyl group, a carbonyl group, an aldehyde group, a sulfonic acid group, and an amino group. Alternatively, the capture substance may be immobilized on filter member 22 by a physical adsorption method, an ion binding method, or the like. The amount of the capture substance to be immobilized on filter member 22 is not particularly limited, and may be set depending on its intended use and purpose.

The capture substance may be selected appropriately depending on the type of a test substance. In the case where the test substance is a nucleic acid, a nucleic-acid probe to be hybridized to the nucleic acid, an antibody to the nucleic acid, or a protein to be bound to the nucleic acid may be used as the capture substance, for example. In the case where the test substance is a protein or a peptide, an antibody to the protein or the peptide may be used as the capture substance, for example. In this way, a test substance holder can selectively hold a specific organic substance corresponding to the capture substance. This makes it possible to pick up only a test substance from a specimen in which the test substance and other foreign substances are mixed together.

The capture substance captures the test substance under conditions where the capture substance and the test substance are bound to each other. The conditions where the capture substance and the test substance are bound to each other may be selected appropriately depending on the type of the test substance and the like. For example, in the case where the test substance is a nucleic acid and the capture substance is a nucleic-acid probe to be hybridized to the nucleic acid, the test substance may be captured when a buffer solution for hybridization exists. In the case where the test substance is a nucleic acid, a protein, or a peptide, and the capture substance is an antibody to the nucleic acid, an antibody to the protein, or an antibody to the peptide, the test substance may be captured in a solution suitable for the reaction of an antibody with an antigen, such as a phosphate buffered saline solution, a HEPES buffer solution, a PIPES buffer solution, or a Tris buffer solution. In the case where the test substance is a ligand and the capture substance is a receptor to the ligand, or where the test substance is a receptor and the capture substance is a ligand to the receptor, the test substance may be captured in a solution suitable for the binding between the ligand and the receptor.

### <Modified Example>

Note that the invention is not limited to the embodiment described above, but encompasses any and all embodiments within the scope of claims. For example, the invention includes the following modified examples.
(1) Although the above embodiment is an example of a system and a device to detect a test substance, the invention is not limited to this. For example, an embodiment may be a device to detect merely fluorescence from a fluorescent substance.
(2) Although an example where the peak wavelength of excitation light is 405 nm is described in the above embodiment, the invention is not limited to this. In embodiments according to the invention, the peak wavelength of excitation light is preferably 300 nm or more to less than 450 nm.
(3) Although an example where a CMOS image sensor using a silicon substrate and including photoelectric conversion elements is used as photodetector 23 is described in the above embodiment, the invention is not limited to this. For example, as photodetector 23, a CMOS image sensor, a micro photomultiplier tube (PMT), a positive-intrinsic-negative (PiN) photodiode, an avalanche photodiode (APD), a multi-pixel photon counter (MPCC), an electron multiplying charge-coupled device (EMCCD), a charge-coupled device (CCD) image sensor, a negative-channel metal oxide semiconductor (NMOS) image sensor, or the like may be used. Besides, the photodetector according to the invention may further include a protective layer as long as it is a photodetector to identify and detect multiple colors.

Photodetector 23 not including a color filter may be used. For example, as photodetector 23, a stacked image sensor having silicon layers stacked in a thickness direction and being operable to identify and detect multiple colors by use of a phenomenon in which colors are absorbed at different levels of the silicon layers, an organic CMOS image sensor having stacked photoelectric conversion films, or the like may be used.
(4) Although an example where light source 31 is constituted by a semiconductor light emitting element such as an LED is described in the above embodiment, the type of light source 31 is not limited to this. For example, light source 31 may be constituted by a discharge lamp (such as an HID lamp).
(5) Although the filter member according to the above embodiment comprises an interference filter, the filter member according to the invention may further include a protective layer as long as it has such characteristics as to cut off light in a wavelength band below a predefined wavelength included in the visible light wavelength band, and to transmit light in a wavelength band at or above the predefined wavelength.

The lens free fluorescent microscope described in Non-patent Literature 1 includes a prism so as to make the excitation light less likely to enter the light-receiving sensor. However, because the prism is very expensive, the use of the prism increases the cost of the lens free fluorescent microscope.

Embodiments described above provide a fluorescence detection apparatus, a test substance detection apparatus, and a fluorescence detection method which enable identification and detection of fluorescence of colors with a low-cost configuration without using an expensive prism.

## Claims

1. A fluorescence detection apparatus comprising:
a photodetector that detects a plurality of colors of light;
a light filter member on or above the photodetector that transmits light at or above a predefined wavelength and that cuts off light with a wavelength included in a wavelength band below the predefined wavelength, the predefined wavelength being included in a wavelength band being a sensitivity range of the photodetector;
an irradiator that irradiates a fluorescent substance on the light filter member, with excitation light with a peak wavelength included in the wavelength band below the predefined wavelength; and
a first correction unit that compensates for a signal of light cut off by the light filter member out of fluorescence emitted from the fluorescent substance in response to irradiation from the excitation light.

2. The fluorescence detection apparatus according to claim 1, further comprising:
an image processing device; and
a display unit, wherein
the image processing device displays, on the display unit, a fluorescence image derived from the first correction unit.

3. The fluorescence detection apparatus according to claim 1 or 2, wherein
the photodetector includes
a first photodetector is sensitive to a first range of wavelength,
a second photodetector is sensitive to a second range of wavelength below the first range of wavelength, and
a third photodetector is sensitive to a third range of wavelength below the second range of wavelength, and wherein
the predefined wavelength is the third range of wavelength.

4. The fluorescence detection apparatus according to claim 3, wherein wavelength range of the excitation light overlaps the thirdrange of the third photodetector.

5. The fluorescence detection apparatus according to any one of claims 1 to 4, wherein the first correction unit performs gamma correction on the signals outputted from the photodetector.

6. The fluorescence detection apparatus according to any one of claims 1 to 5, further comprising a second correction unit that reduces signals of excitation light transmitted through the light filter member and detected by the photodetector.

7. The fluorescence detection apparatus according to claim 6, wherein the second correction unit performs offset processing on the signals outputted from the photodetector.

8. The fluorescence detection apparatus according to any one of claims 1 to 7, wherein
the light filter member is an interference filter, and
the irradiator irradiates parallel light perpendicular to the interference filter.

9. The fluorescence detection apparatus according to claim 8, wherein the irradiator includes
a light source that emits excitation light, and
a collimating optical system that collimates the excitation light into light parallel to an optical axis of the light source.

10. The fluorescence detection apparatus according to claim 9, wherein the irradiator further includes another light source that emits light with a wavelength longer than wavelength of the excitation light.

11. The fluorescence detection apparatus according to claim 9 or 10, wherein the interference filter has light transparency wherein transmittance of fluorescence emitted from the fluorescent substance is at least 90 times higher than transmittance of the parallel light emitted from the irradiator.

12. The fluorescence detection apparatus according to claim 4, wherein the excitation light has a peak wavelength between 300 nm and 450 nm.

13. The fluorescence detection apparatus according to any one of claims 1 to 12, wherein the predefined wavelength is between 400 nm and 500 nm.

14. The fluorescence detection apparatus according to any one of claims 1 to 13, wherein the light filter member cuts off more than 95% of light with a wavelength range below the predetermined wavelength.

15. A fluorescence detection method comprising:
locating a fluorescent detector substance to be measured on a light filter member that transmits light with a wavelength included in a wavelength band at or above a predefined wavelength, and to cut off light with a wavelength included in a wavelength band below the predefined wavelength, the predefined wavelength being included in a wavelength band being a sensitivity range of a photodetector that identifies and detects colors;
irradiating the fluorescent substance on the filter member with excitation light with a peak wavelength included in the wavelength band below the predefined wavelength;
detecting fluorescence emitted from the fluorescent substance in response to the excitation light and transmitted through the filter member; and
compensating for a signal of light cut off by the filter member out of the fluorescence emitted from the fluorescent substance in response to the irradiation with the excitation light.
